# EUROPEAN PATENT SPECIFICATION

(11) **EP 1 686 051 B1**
(45) Date of publication and mention of the grant of the patent: **26.03.2008**
(21) Application number: 06001537.7
(22) Date of filing: 25.01.2006
(51) Int. Cl.: B62J 6/02, B62J 6/04

(54) **Bicycle lighting device**
Fahrradbeleuchtung
Dispositif d' éclairage de bicyclette

(30) Priority: 31.01.2005 JP 2005023804
(43) Date of publication of application: 02.08.2006
(73) Proprietor: SHIMANO INC., Osaka 590-8577 (JP)
(72) Inventor: Naohiro, Nishimoto, Sakai Osaka 590-8577 (JP)
(74) Representative: Hofmann, Harald

(56) References cited:
- EP-A- 0 940 331
- US-A- 5 384 693

## Description

### BACKGROUND OF THE INVENTION

### Field of the Invention

The present invention relates to a lighting device, and more particularly to a bicycle lighting device mounted to a bicycle.

### Description of the Related Art

In a bicycle, a lighting device such as a headlight or a tail light is mounted to a frame. As a conventional lighting device, a bicycle headlight is known that illuminates the front and also brightens side portions of the lighting device by laterally escaping light (see Japanese Design Registration No. 1116122). The conventional lighting device includes a case member that is securable to the bicycle, and has openings in a front portion and opposite side portions of the front portion, a lens member that covers the openings, an electric light bulb placed in the case member, and a reflective member that reflects light from the electric light bulb toward the lens member.

In the conventional lighting device, the case member has the openings in the front portion and the opposite side portions of the front portion, and thus the light from the electric light bulb can illuminate the front of the case member and also brightens the side portions by the laterally escaping light. When the side portions of the case member are thus brightened, the bicycle can be visually perceived from the sides during the night, thereby improving safety during the night.

The european patent application EP-A-0940331 discloses such a bicycle lighting device with laterally escaping light portions.

### SUMMARY OF THE INVENTION

In the conventional lighting device, the case member has the openings in the front portion and the opposite side portions of the front portion, and the openings are covered with the lens member, thereby brightening front portions only of the side portions. Thus, the brightened positions in the side portions are limited in the front portions. Further, the light illuminating the front escapes as it is, and the escaping light and the light illuminating the front are integrated to prevent a distinction between the front portion and the side portions.

Such a bicycle headlight is used outdoors, and thus the openings provided in the case member may cause a liquid from flowing into the case member through a clearance between the openings and a cover member even if the openings are sealed by the cover member. In the conventional lighting device in which the liquid flows into the case member, the liquid tends to remain in the case member. The liquid remaining in the case member may cause defects such as corrosion of components in the case member or insufficient insulation.

The present invention has an object to provide a bicycle lighting device that brightens side portions in which brightened positions in the side portions are not limited as much as possible, and light in the side portions and light in a front portion can be distinguished.

The present invention has another object to provide a bicycle lighting device having openings in which a liquid flowing into a case member, if any, is prevented from remaining in the case member as much as possible.

A bicycle lighting device according to the invention 1 mounted to a bicycle includes: an outer case member; a lens member; an inner case member; a light emitting portion; a reflective member; and a light escaping portion. The outer case member is a member that is securable to the bicycle, and includes a housing space formed therein, a first opening placed in a front surface, and a second opening placed in a side surface. The lens member is a translucent member that covers the first opening. The inner case member is a translucent member that is at least partially placed in the housing space of the outer case member and covers the second opening from the inside. The light emitting portion is placed in the inner case member. The reflective member is a member that is placed in the inner case body and reflects light from the light emitting portion toward the lens member. The light escaping portion is able to cause the light emitted from the light emitting portion to escape toward the inner case member.

The features of the preamble of claim 1 of the present invention are known from the disclosure EP-A-0 940 331.

When the lighting device is placed forward or backward, the light emitted from the light emitting portion is reflected by the reflective member toward the lens member that covers the first opening provided in the front surface to illuminate the front or the rear of the bicycle. Part of the light emitted from the light emitting portion escapes through the light escaping portion toward the inner case member to bright the inner case member that covers the second opening provided in the side surface of the outer case member. The light escaping portion is provided to cause the light emitted from the light emitting portion to escape toward the translucent inner case member that covers the second opening placed in the side surface, thereby allowing the second opening to be provided in any position. Thus, the brightened position in the side portion is not limited, and light in the side portion and light in a front portion can be distinguished.

In the bicycle lighting device according to the invention 2, the light escaping portion has a facing portion that is provided in the lens member and faces the inner case member in close proximity in the device according to the invention 1. In this case, the light escaping portion can be constituted using the lens member on which the light reflected by the reflective member concentrates. Thus, even if the light escapes from the light escaping portion, the amount of light illuminated by the lens member is prevented from reducing, and even if the side surface is brightened, an illumination level on the front surface is prevented from being low.

In the bicycle lighting device according to the invention 3, the inner case member has an annular portion placed in an annular shape along an inner wall of the outer case member in the device according to the invention 1 or 2. In this case, the second opening is partially covered with the inner case member, and also the annular portion is provided along the inner wall of the outer case member. Thus, even if a liquid flows in through a clearance between the inner case member and the second opening, the liquid is prevented from flowing into the inner case member.

In the bicycle lighting device according to the invention 4, the inner case member has an annular groove that is provided in the annular portion and communicates with the second opening, and the outer case member has a drain portion that communicates with the annular groove in the device according to the invention 3. In this case, even if the liquid flows in through the clearance between the second opening and the inner case member, the liquid is easily collected into the drain portion of the outer case member via the annular groove provided in the annular portion. Thus, even if the liquid flows in, the liquid is prevented from remaining in the device, thereby preventing defects such as corrosion or insufficient insulation.

In the bicycle lighting device according to the invention 5, a portion that covers the second opening of the inner case member protrudes so as to be substantially flush with an outer side surface of the outer case member in the device according to any of the inventions 1 to 3. In this case, the inner case member and the outer case member are flush with each other at the portion that covers the second opening, thereby providing a desirable design and preventing foreign matter form depositing on an edge of the second opening because no step is formed.

In the bicycle lighting device according to the invention 6, second openings are formed in two facing places in side surfaces of the housing space of the outer case member in the device according to any of the inventions 1 to 4. In this case, the second openings are formed in the two facing side surfaces, thereby facilitating lateral visual perception of the bicycle.

In the bicycle lighting device according to the invention 7, the drain portion is formed in a lowermost position when the outer case member is mounted to the bicycle in the device according to the invention 4 or 5. In this case, the liquid is easily collected into the drain portion by gravity.

In the bicycle lighting device according to the invention 8, the drain portion includes a drain hole that communicates with the outside of the outer case member, and a recess formed around the drain hole in the device according to the invention 7. In this case, the liquid is easily collected into the recess, and the liquid collected in the drain portion can be efficiently drained to the outside.

In the bicycle lighting device according to the invention 9, the light emitting portion includes an electric light bulb placed in the outer case member, and an electric light bulb support portion for mounting the electric light bulb to the outer case member in the device according to any of the inventions 1 to 8. In this case, the electric light bulb is used as a light source, thereby increasing the amount of light.

According to the present invention, the light escaping portion is provided to cause the light emitted from the light emitting portion to escape toward the translucent inner case member that covers the second opening placed in the side surface, thereby allowing the second opening to be provided in any position. Thus, the brightened position in the side portion is not limited, and light in the side portion and light in the front portion can be distinguished.

According to another invention of the present invention, the annular portion is provided in the inner case member along the inner wall of the outer case member, the annular groove is provided in the annular portion, and the drain portion that communicates with the annular groove is provided in the outer case member. Thus, even if the liquid flows in through the clearance between the second opening and the inner case member, the liquid is easily collected into the drain portion of the outer case member via the annular groove provided in the annular portion. Therefore, even if the liquid flows in, the liquid is prevented from remaining in the device, thereby preventing defects such as corrosion or insufficient insulation.

### BRIEF DESCRIPTION OF THE DRAWINGS

FIG. 1 is a side view of a bicycle using one embodiment of the present invention;
FIG. 2 is a side view of a headlight that is a bicycle lighting device according to one embodiment of the present invention;
FIG. 3 is a plan view thereof;
FIG. 4 is a sectional view thereof;
FIG. 5 is an exploded perspective view thereof; and
FIG. 6 is a view corresponding to FIG. 4 according to another embodiment.

### DETAILED DESCRIPTION OF THE PREFERRED EMBODIMENTS

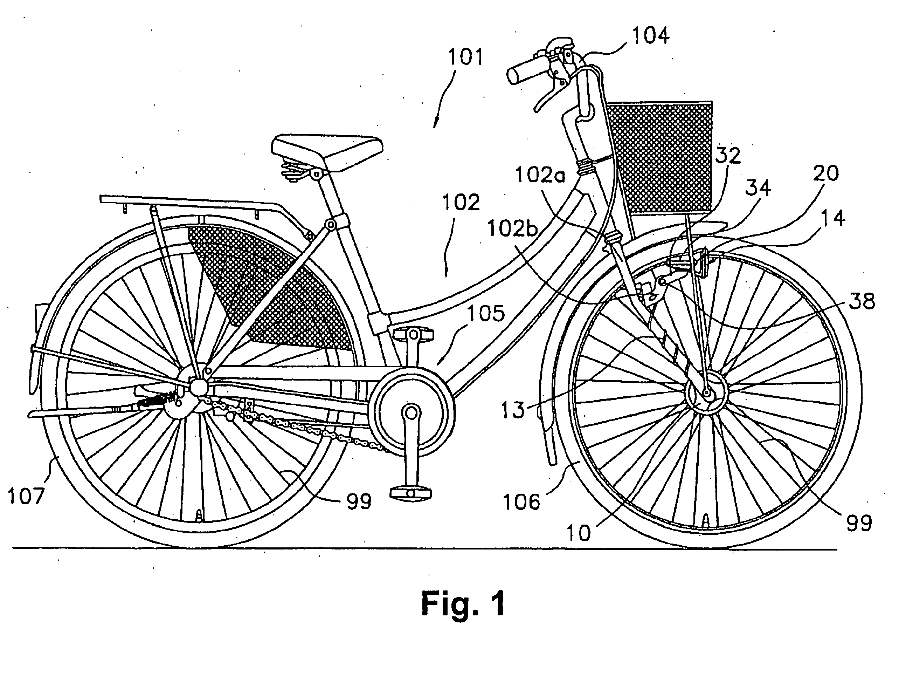

In FIG. 1, a bicycle 101 using one embodiment of the present invention includes a frame 102 having a front fork 102a, a handlebar 104, a drive portion 105 constituted by a chain or a pedal or the like, and a front wheel (wheel) 106 and a rear wheel 107 having spokes 99. A power generation hub 10 is incorporated into the front wheel 106 of the bicycle 101, and generated power is supplied via an electric power line 13 to a headlight 14 having an optical sensor according to one embodiment.

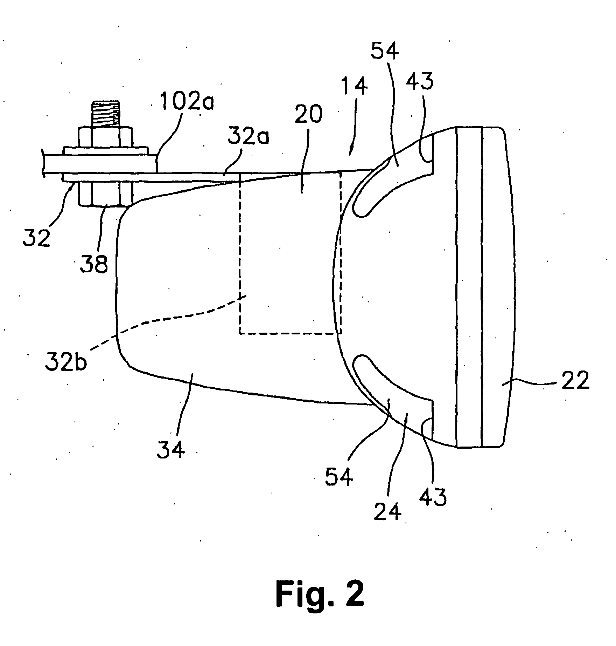

The headlight 14 is mounted to the front fork 102a of the bicycle 101, for example, a lamp stay 102b welded and secured. As shown in FIGS. 2 to 4, the headlight 14 includes an outer case member 20 securable to the lamp stay 102b, a lens member 22 mounted to the outer case member 20, an inner case member 24 placed in the outer case member 20, a light emitting portion 26 having an electric light bulb 60 as a light source and placed in the outer case member 20, a reflective member 28 that reflects light from the light emitting portion 26 toward the lens member 22, and a light escaping portion 30 that causes the light emitted from the light emitting portion 26 to escape toward the inner case member 24.

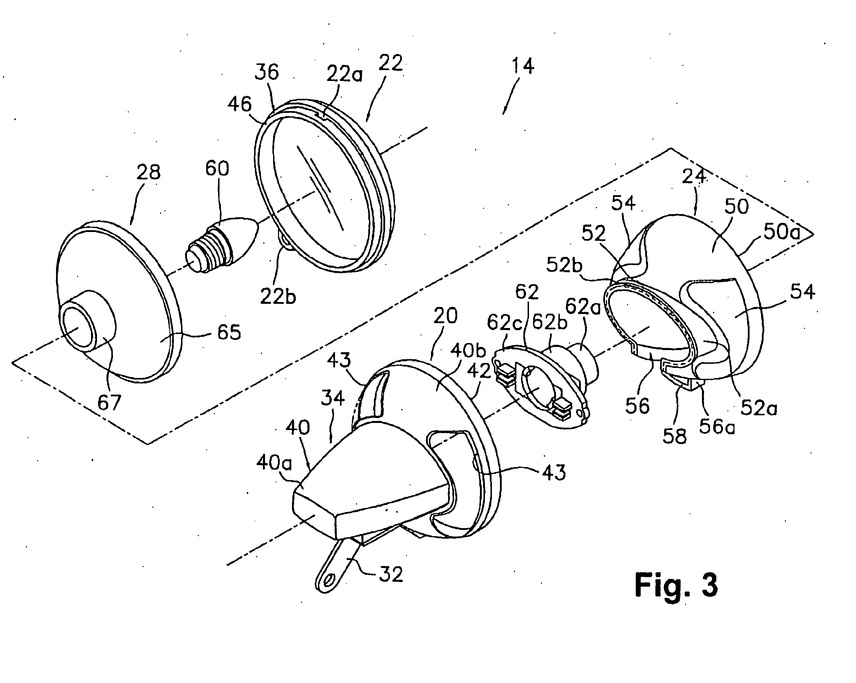

As shown in FIGS. 2 and 3, the outer case member 20 includes a bracket 32 securable to the lamp stay 102b and a case body 34 secured to the bracket 32. The bracket 32 is formed by bending a metal plate, and has a securing portion 32a secured to a bottom surface of the case body 34 by, for example, a rivet 36 (FIG. 2), and an arm portion 32b bent from the securing portion 32a. As shown in FIG. 1, a tip of the arm portion 32b is secured to a tip of the lamp stay 102b by a bolt and a nut 38.

The case body 34 is a member made of polystyrene-based synthetic resin such as ABS (acrylonitrile butadiene styrene) resin, and includes a body portion 40, a housing space 41 formed in the body portion 40, a first opening 42 placed in a front surface of the body portion 40, and second openings 43 placed in side surfaces of the body portion 40 as shown in FIGS. 2 to 5. The body portion 40 includes a first case portion 40a in which a control circuit 44 including an on/off circuit that turns on/off the optical sensor or the electric light bulb 60 according to an output of the optical sensor, or the like is placed, and a second case portion 40b in which the light emitting portion 26 or the like is housed. The first case portion 40a is formed into a substantially oval shape horizontally oriented. The second case portion 40b is sharply diverged into a bowl shape from the first case portion 40a, and has a substantially circular section orthogonal to an optical axis of the electric light bulb 60.

The body portion 40 is formed to have a substantially even thickness so as to form a first space 41a and a second space 41b described below in the housing space 41. Three steps 40c, 40d, 40e are formed in a bottom of the body portion 40. The step 40c is placed in a rear portion of the first case portion 40a and recessed from other portions. A lighting window 40f for introducing light to the optical sensor (not shown) is formed in the step 40c. The lighting window 40f is sealed by a transparent circular seal member 49. The step 40d is placed in a front portion of the first case portion 40a and protrudes from other portions. The securing portion 32a of the bracket 32 is secured to the step 40d by the rivet 36. The step 40e is placed in the second case portion 40b and protrudes from other portions in a lowermost position when the second case portion 40b is mounted to the bicycle 101. A drain portion 45 for draining a liquid flowing into the headlight 14 is formed in the step 40e. The drain portion 45 includes a wire insertion hole 45a that is formed in a rear portion and communicates with the outside, and a drain hole 45b in a slit shape formed in a front portion. The drain hole 45b is formed for draining the liquid collected in the drain portion 45 to the outside of the headlight 14.

The housing space 41 formed in the body portion 40 is partitioned into two spaces: the first space 41a and the second space 41 b, near a boundary between the first case portion 40a and the second case portion 40b by a partition member (an example of an electric light bulb support portion) 62 that has a light blocking effect and constitutes the light emitting portion 26.

The first opening 42 is a substantially circular opening formed in the front surface of the second case portion 40b, and is placed in the front surface of the headlight 14. The lens member 22 is mounted to the first opening 42. The second openings 43 are a pair of right and left openings placed in opposite side surfaces of the second case portion 40b. The second openings 43 are provided in order to provide bright portions in the side portions of the headlight 14 to allow the bicycle 101 to be visually perceived from the sides during the night, thereby improving safety during the night. Each of the second openings 43 is formed into a substantially W shape with two peaks. The second openings 43 are closed by the inner case member 24 from the inside.

The lens member 22 is made of translucent synthetic resin such as transparent acrylic resin or polycarbonate, and is a member in a circular dish shape formed so as to cover the first opening 42. The lens member 22 may be translucent, and may be colored rather than transparent. The lens member 22 of the case body 34 has, in an inner side surface thereof, a cylindrical facing portion 46 that constitutes the light escaping portion 30. The facing portion 46 is placed so as to face a circular tip of the inner case member 24, and is formed to be stepped down from an outer diameter of the lens member 22 so as to be in contact with an inner peripheral surface of the first opening 42 in the case body 34 of the outer case member 20. The lens member 22 is secured to a front surface of the outer case member 20 by a screw.

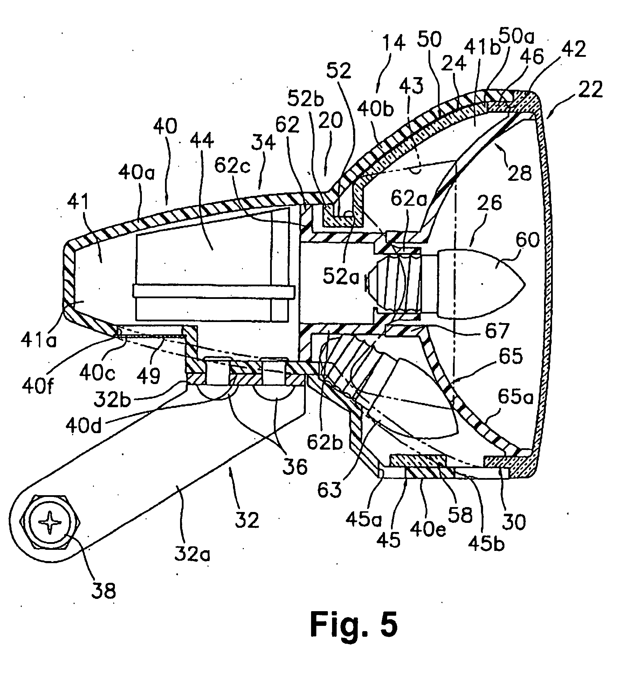

As shown in FIG. 5, in part of an outer peripheral surface of the lens member 22, a locking recess 22a that is locked to an inner peripheral surface of the outer case member 20 is formed, and a screwing protrusion 22b through which a screw passes is formed substantially 150° apart from the locking recess 22a so as to diametrically protrude. In the inner peripheral surface of the outer case member 20, a locking protrusion (not shown) to which the locking recess is locked is formed, and a screw hole protrusion (not shown) in which the screw is threaded is formed substantially 150° apart from the locking protrusion.

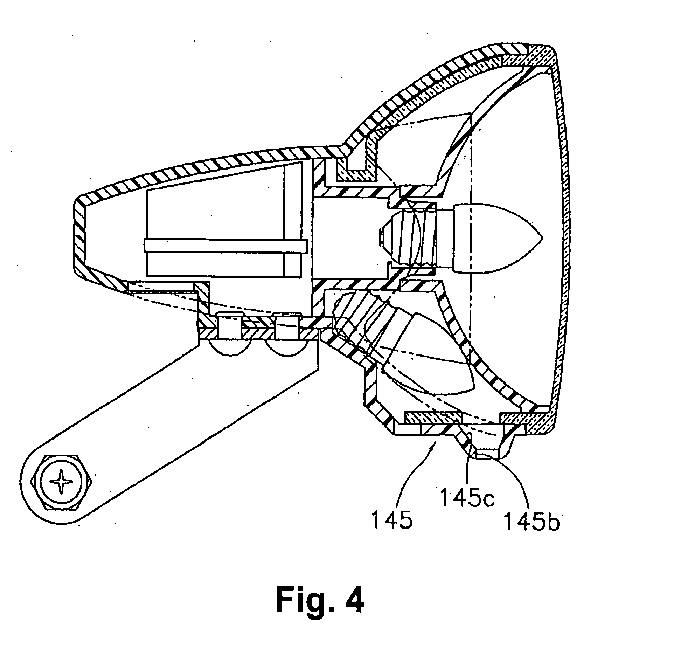

The inner case member 24 is made of translucent synthetic resin such as transparent acrylic resin or polycarbonate, and is a member that is at least partially placed in the housing space 41 of the outer case member 20 and covers the second openings 43 from the inside. The inner case member 24 may be translucent, and may be colored rather than transparent. The inner case member 24 is pressed by the lens member 22 fastened by the screw to the outer case member 20, and secured to the outer case member 20. As shown in FIGS. 4 and 5, the inner case member 24 includes an annular portion 50 placed in the second space 41b in the second case portion 40b, an annular groove 52 provided in a rear portion of the annular portion 50, a pair of cover portions 54 (see FIGS. 2, 3 and 5) formed in an outer side surface of the annular portion 50 to protrude in the same shape as the pair of second openings 43 so as to cover the second openings 43, a notch 56 (see FIG. 5) formed by providing communication between the annular portion 50 and the annular groove 52, and a connecting portion 58 that connects tips of the notch 56.

The annular portion 50 is formed into a substantially bowl shape along an inner wall of the second case portion 40b of the body portion 40. A tip 50a having a large diameter of the annular portion 50 is placed to face the facing portion 46 (the light escaping portion 30) of the lens member 22. Thus, light escaping from the facing portion 46 brightens the annular portion 50.

The annular groove 52 is provided to communicate with the second openings 43. The annular groove 52 is formed to introduce the liquid flowing in through a clearance between the cover portions 54 and the second openings 43 to the drain portion 45. The annular groove 52 includes a groove portion 52a formed in a rear end of the annular portion 50 and having an oval section, and an oval flange portion 52b placed in a rear end of the groove portion 52a in contact with the inner wall of the first case portion 40a. The groove portion 52a is provided in order to secure the inner case member 24 to the outer case member 20, and prevent the liquid introduced into the groove portion 52a from leaking backward.

The cover portions 54 are formed to protrude so as to be substantially flush with the outer side surface of the outer case member 20. Each of the cover portions 54 protrudes in a substantially W shape along an edge of the second opening 43. The groove portion 52a of the annular groove 52 extends to a rear edge of the cover portion 54. Thus, the length in front and back directions of the groove portion 52a is the longest at a recessed portion in the center of the cover portion 54, and the shortest at protruding both ends.

The notch 56 has walls 56a formed along an inner wall of the step 40e. The connecting portion 58 connects the walls 56a. A backup electric light bulb 63 is housed between the walls 56a. The notch 56 and the walls 56a are provided to prevent the liquid introduced into the annular groove 52 from flowing into the notch 56. The connecting portion 58 is placed in contact with the inner wall of the step 40e.

The light emitting portion 26 includes the electric light bulb 60 as a light source placed in the outer case member 20, and the partition member 62 for mounting the electric light bulb 60 to the lens member 22. The electric light bulb 60 is screwed into and secured to the partition member 62.

Unshown two connection terminals are provided in the partition member 62, and in electrical contact with a side and a rear end of a base of the electric light bulb 60. The partition member 62 is made of, for example, synthetic resin such as fiberglass-impregnated polyamide resin, and includes a cylindrical socket 62a in which the connection terminals are placed, a square holding tube 62b formed integrally with a rear portion of the socket 62a, and an oval flange portion 62c formed in a rear portion of the holding tube 62b. The flange portion 62c is fastened by a screw to the first case portion 40a of the body portion 40 of the outer case member 20. A rear end surface of the reflective member 28 is in contact with a tip surface of the holding tube 62b. The partition member 62 is a member that functions as the electric light bulb support portion and also partitions the housing space 41 into the first space 41a and the second space 41b as described above. A space outside the reflective member 28 in the second space 41b is brightened by the light escaping from the light escaping portion 30 when the electric light bulb 60 is lit. The first space 41 a is, however, blocked by the partition member 62 and is not brightened. Thus, even if the side portions of the headlight 14 are brightened, a malfunction of the optical sensor housed in the first space 41a is prevented.

The reflective member 28 is a member made of polystyrene-based synthetic resin such as ABS (acrylonitrile butadiene styrene) resin, and includes a reflective portion 65 having an aspheric reflective surface 65a in a front surface thereof, and a cylindrical mounting portion 67 integrally formed with a rear end of the reflective portion 65. The reflective surface 65a has an aluminum coat formed by, for example, depositing aluminum on the front surface. The mounting portion 67 is formed into a cylindrical shape and spaced apart from the socket 62a of the partition member 62. An aluminum coat is also formed on an inner side surface of the mounting portion 67 by deposition. In the reflective member 28, a front portion of the reflective portion 65 fits the inner peripheral surface of the lens member 22 and is pressed, and a rear surface of the mounting portion 67 is in contact with a front surface of the holding tube 62b of the partition member 62. Thus, the reflective member 28 is secured to the outer case member 20 via the partition member 62 by fastening the lens member 22 to the outer case member 20 by the screw like the inner case member 24.

The light escaping portion 30 has the facing portion 46 of the lens member 22 as described above. The light escaping portion 30 causes light circumferentially diffused through the lens member 22 among the light illuminated by the lens member 22 to escape toward the inner case member 24.

In the headlight 14 thus configured, when the bicycle 101 runs and the power generation hub 10 mounted to the front wheel 106 generates power, the electric light bulb 60 is turned on/off according to the amount of light detected by the optical sensor. When the electric light bulb 60 is turned on, the light emitted from the electric light bulb 60 is reflected by the reflective portion 65 of the reflective member 28 toward the lens member 22 that covers the first opening 42 provided in the front surface, and passes through the lens member 22 to illuminate the front of the bicycle 101. Part of the light emitted from the electric light bulb 60 passes through the lens member 22 and travels toward the light escaping portion 30, escapes from the light escaping portion 30 toward the inner case member 24, and brightens the inner case member 24. Thus, the second openings 43 provided in the side surfaces of the outer case member 20 are brightened, and the side portions of the headlight 14 are brightened.

The light escaping portion 30 is provided to cause the light emitted from the electric light bulb 60 to escape toward the inner case member 24 that covers the second openings placed in the side surfaces, thereby allowing the second openings to be provided in any positions. Thus, the brightened positions in the side portions of the headlight 14 are not limited, and light in the side portions and light in the front portion can be distinguished.

The annular portion 50 and the annular groove 52 are provided in the inner case member 24, and thus even if the liquid flows in through the clearance between the second opening and the cover portions 54, the liquid is easily collected into the drain portion 45 of the outer case member 20 via the annular groove 52 provided in the annular portion 50. Therefore, even if the liquid flows in, the liquid is prevented from remaining in the headlight 14, thereby preventing defects such as corrosion or insufficient insulation.

### <Other Embodiments>

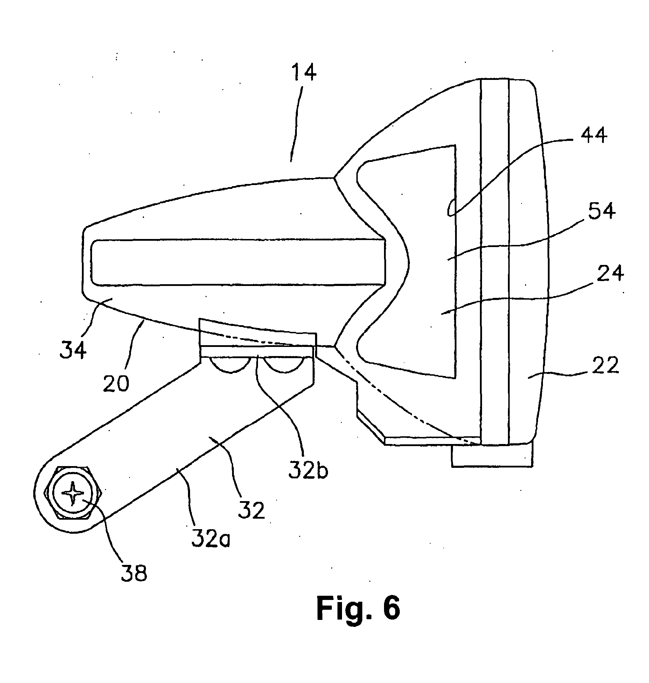

(a) In the above described embodiment, the present invention is described taking the bicycle headlight as an example, but the present invention may be applied to a bicycle tail light.
(b) In the above described embodiment, the present invention is described taking the headlight turned on/off by the optical sensor, but the bicycle lighting device to which the present invention is applied is not limited to this, and the present invention may be applied to all types of bicycle lighting devices. For example, the present invention may be applied to a headlight integrated with a rim dynamo, or to a separate headlight connected to a dynamo by a wire.
(c) In the above described embodiment, the drain hole 45b is formed in the drain portion 45, but as shown in FIG. 6, a drain portion 145 may include a drain hole 145b that communicates with the outside of an outer case member, and a recess 145c formed around the drain hole 145b. In this case, a liquid is easily collected into the recess 145c, and the liquid collected in the drain portion 145 can be efficiently drained to the outside.
(d) In the above described embodiment, the light escaping portion 30 is constituted by the facing portion 46 provided in the lens member 22, but the light escaping portion 30 may be of any type as long as the light escaping portion 30 causes the light from the light emitting portion 26 to escape toward the inner case member. For example, a transparent reflective member 28 may be provided and no aluminum coat may be formed on the inner peripheral surface of the mounting portion 67 to constitute a light escaping portion, so that the light escaping portion causes light to escape toward the inner case member 24 through a clearance between the mounting portion 67 and the socket 62a of the partition member 62. The light escaping portion may be constituted by the mounting portion 67 and the facing portion 46. Further, no aluminum coat may be formed in part of the reflective portion 65 and the lens member 22 to constitute a light emitting portion.
(e) In the above described embodiment, the electric light bulb is illustrated as the light source of the light emitting portion, but the light source is not limited to the electric light bulb, but may be of any type that emits light. For example, the light source may be an LED or a fluorescent lamp.

### Description of Symbols

- 14: headlight
- 20: outer case member
- 22: lens member
- 24: inner case member
- 26: light emitting portion
- 28: reflective member
- 30: light escaping portion
- 41: housing space
- 42: first opening
- 43: second opening
- 45, 145: drain portion
- 45b, 145b: drain hole
- 46: facing portion
- 50: annular portion
- 52: annular groove
- 60: electric light bulb
- 62: partition member (an example of electric light bulb support portion)
- 101: bicycle
- 145c: recess

## Claims

1. A bicycle lighting device mounted to a bicycle (101) comprising:
an outer case member (20) that is securable to said bicycle (101), and includes a housing space (41) formed therein, a first opening (42) placed in a front surface, and a second opening (43) placed in a side surface;
a translucent lens member (22) that covers said first opening (42);
a translucent inner case member (24) that is at least partially placed in said housing space (41) of said outer case member (20) and covers said second opening (43) from the inside;
a light emitting portion (26) placed in said inner case member (24);
a reflective member (28) that is placed in said inner case body (24) and reflects light from said light emitting portion (26) toward said lens member (22) **characterised in that**
a light escaping portion (30) is placed at said translucent lens member (22) and is able to cause the light emitted from said light emitting portion (26) to escape toward said inner case member (24).

2. The bicycle lighting device according to claim 1, wherein said light escaping portion (30) has a facing portion (46) that is provided on said lens member (22), said facing portion (46) faces said inner case member (24).

3. The bicycle lighting device according to claim 1 or 2, wherein said inner case member (24) has an annular portion (50) placed in an annular shape along an inner wall of said outer case member (20).

4. The bicycle lighting device according to claim 3, wherein said inner case member (24) has an annular groove (52) that is provided in said annular portion (50) and communicates with said second opening (43), and
said outer case member (20) has a drain portion (45) that communicates with said annular groove (52).

5. The bicycle lighting device according to any one of claims 1 to 4, wherein a portion that covers said second opening (43) of said inner case member (24) protrudes so as to be substantially flush with an outer side surface of said outer case member (20).

6. The bicycle lighting device according to any one of claims 1 to 5, wherein second openings (43) are formed in two facing places in side surfaces of said outer case member (20).

7. The bicycle lighting device according to any one of claims 4 to 6, wherein said drain portion (45) is formed in a lowermost position when said outer case member (20) is mounted to the bicycle (101).

8. The bicycle lighting device according to claim 7, wherein said drain portion (45) includes a drain hole (145b) that communicates with the outside of said outer case member (20), and a recess (145c) formed around said drain hole (145b).

9. The bicycle lighting device according to any one of claims 1 to 8, wherein said light emitting portion (26) includes an electric light bulb (60) placed in said outer case member (20), and an electric light bulb support portion (62) for mounting said electric light bulb (60) to said outer case member (20).

## Patentansprüche

1. Fahrradbeleuchtungseinrichtung, montiert an einem Fahrrad (101), umfassend :
ein äußeres Gehäuseteil (20), welches an dem Fahrrad (101) fixierbar ist und einen Gehäuseraum (41) umfasst, der darin ausgebildet ist, eine erste Öffnung (42), platziert in einer vorderen Fläche und eine zweite Öffnung (43), platziert in einer Seitenfläche;
ein transluzentes Linsenteil (22), welches die erste Öffnung (42) bedeckt;
ein transluzentes inneres Gehäuseteil (24) welches zumindest teilweise in dem Gehäuseraum (41) des äußeren Gehäuseteils (20) platziert ist und die zweite Öffnung (43) von der Innenseite bedeckt;
einen lichtemittierenden Abschnitt (26), welcher in dem inneren Gehäuseteil (24) platziert ist;
ein reflektierendes Teil (28), welches in den inneren Gehäusekörper (24) platziert ist und Licht von dem Lichtemittierabschnitt (26) zu dem Linsenteil (22) reflektiert, **dadurch gekennzeichnet, dass**
ein Lichtaustrittsabschnitt (30) bei dem transluzenten Linsenteil (22) platziert ist und fähig ist, das Licht, welches von dem Lichtemittierabschnitt (26) emittiert wird, zu dem inneren Gehäuseteil (24) hin auszutreten.

2. Fahrradbeleuchtungseinrichtung gemäß Anspruch 1, wobei der Lichtaustrittsabschnitt (30) einen zugewandten Abschnitt (46) umfasst, welcher bei dem Linsenteil (22) bereitgestellt ist, wobei der zugewandte Abschnitt (46) dem inneren Gehäuseteil (24) gegenübersteht.

3. Fahrradbeleuchtungseinrichtung gemäß Anspruch 1 oder 2, wobei das innere Gehäuseteil (24) einen ringförmigen Abschnitt (50) umfasst, welcher in einer ringförmigen Gestalt entlang der inneren Wand des äußeren Gehäuseteils (20) platziert ist.

4. Fahrradbeleuchtungseinrichtung gemäß Anspruch 3, wobei der innere Gehäuseteil (24) eine ringförmige Nut (52) umfasst, welche in dem ringförmigen Abschnitt (50) bereitgestellt ist und mit der zweiten Öffnung (43) kommuniziert, und wobei das äußere Gehäuseteil (20) einen Kanalabschnitt (45) umfasst, welcher mit der ringförmigen Nut (52) kommuniziert.

5. Fahrradbeleuchtungseinrichtung gemäß einem der Ansprüche 1 bis 4, wobei ein Abschnitt, welcher die zweite Öffnung (43) des inneren Gehäuseteils (24) bedeckt, vorragt, um im Wesentlichen bündig mit einer äußeren Seitenfläche des äußeren Gehäuseteils (20) abzuschließen.

6. Fahrradbeleuchtungseinrichtung gemäß einem der Ansprüche 1 bis 5, wobei zweite Öffnungen (43) an zwei gegenüberstehenden Orten in Seitenflächen des äußeren Gehäuseteils (20) ausgebildet sind.

7. Fahrradbeleuchtungseinrichtung gemäß einem der Ansprüche 4 bis 6, wobei der Kanalabschnitt (45) in einer untersten Position ausgebildet ist, wenn das äußere Gehäuseteil (20) an das Fahrrad (101) montiert ist.

8. Fahrradbeleuchtungseinrichtung gemäß Anspruch 7, wobei der Kanalabschnitt (45) ein Kanalloch (145b) umfasst, welches mit der Außenseite des äußeren Gehäuseteils (20) kommuniziert, sowie eine Aussparung (145c), um das Kanalloch (145b) ausgebildet.

9. Fahrradbeleuchtungseinrichtung gemäß einem der Ansprüche 1 bis 8, wobei der Lichtemittierabschnitt (26) eine elektrische Glühbirne (60) umfasst, welche in dem äußeren Gehäuseteil (20) platziert ist, sowie einen elektrischen Glühbirnenlagerabschnitt (62), zum Montieren der elektrischen Glühbirne (60) bezüglich des äußeren Gehäuseteiles (20).

## Revendications

1. Dispositif d'éclairage de bicyclette monté sur une bicyclette (101) comprenant:
- un élément de boîtier externe (20) qui peut être fixé sur ladite bicyclette (101), et qui comprend un espace de logement (41), qui y est formé, une première ouverture (42) placée dans une surface avant, et une deuxième ouverture (43) située dans une surface latérale ;
- un élément de lentille translucide (22) qui couvre ladite première ouverture (42) ;
- un élément de boîtier interne translucide (24) qui est au moins partiellement placé dans l'espace de logement (41) de l'élément de boîtier externe (20) et qui couvre la deuxième ouverture (43) depuis l'intérieur ;
- une partie d'émission de lumière (26) placée dans l'élément de boîtier interne (24) ;
- un élément réflecteur (28), qui est placé dams le corps de boîtier interne (24) et qui réfléchit la lumière en provenance de la partie d'émission de lumière (26) vers l'élément de lentille (22), **caractérisé en ce qu'**une partie de fuite de lumière (30) est placée au niveau de l'élément de lentille translucide (22) et est capable d'amener la lumière émise en provenance de la partie d'émission de lumière (26) à s'échapper en direction de l'élément de boîtier interne (24).

2. Dispositif d'éclairage de bicyclette selon la revendication 1, dans lequel la partie de fuite de lumière (30) a une partie frontale (46) qui est formée sur l'élément de lentille (22) ; la partie frontale (46) faisant face à l'élément de boîtier interne (24).

3. Dispositif d'éclairage de bicyclette selon la revendication 1 ou 2, dans lequel l'élément de boîtier interne (24) a une partie annulaire (50) placée dans une forme annulaire le long d'une paroi interne de l'élément de boîtier externe (20).

4. Dispositif d'éclairage de bicyclette selon la revendication 3, dans lequel l'élément de boîtier interne (24) a une rainure annulaire (52) qui est fournie dans la partie annulaire (50) et communique avec la deuxième ouverture (43), et l'élément de boîtier externe (20) a une partie de drain (45) qui communique avec la rainure annulaire (52).

5. Dispositif d'éclairage de bicyclette selon l'une quelconque des revendications 1 à 4, dans lequel une partie qui recouvre la deuxième ouverture (43) de l'élément de boîtier interne (24) fait saillie, de manière à être sensiblement alignée avec une surface latérale externe de l'élément de boîtier externe (20).

6. Dispositif d'éclairage de bicyclette selon l'une quelconque des revendications 1 à 5, dans lequel des deuxième ouvertures (43) sont formées dans deux emplacements se faisant face, dans des surfaces latérales dans l'élément de boîtier externe (20).

7. Dispositif d'éclairage de bicyclette selon l'une quelconque des revendications 4 à 6, dans lequel la partie de drain (45) est formée dans une position la plus inférieure lorsque l'élément de boîtier externe (20) est monté sur la bicyclette (101).

8. Dispositif d'éclairage de bicyclette selon la revendication 7, dans lequel la partie de drain (45) comprend un trou de drain (145b) qui communique avec l'extérieur de l'élément de boîtier externe (20), et un évidement (145c) formé autour du trou de drain (145b).

9. Dispositif d'éclairage de bicyclette selon l'une quelconque des revendications 1 à 8, dans lequel la partie d'émission de lumière (26) comprend une ampoule de lumière électrique (60) placée dans l'élément de boîtier externe (20), et une partie de support d'ampoule de lumière électrique (62) pour monter l'ampoule de lumière électrique (60) à l'élément de boîtier externe (20).
